# EUROPÄISCHE PATENTSCHRIFT

(11) **EP 3 105 127 B1**
(45) Veröffentlichungstag und Bekanntmachung des Hinweises auf die Patenterteilung: **05.06.2019**
(21) Anmeldenummer: 15711035.4
(22) Anmeldetag: 10.02.2015
(51) Int. Cl.: B65B 13/06, B65B 13/22, G06F 17/24, G06K 9/22, G09G 5/12, H04W 88/06

(54) **UMREIFUNGSEINRICHTUNG**
STRAPPING APPARATUS
SYSTÈME DE CERCLAGE

(30) Priorität: 10.02.2014 CH 181142014; 10.02.2014 CH 182142014; 10.02.2014 CH 183142014
(43) Veröffentlichungstag der Anmeldung: 21.12.2016
(73) Patentinhaber: Orgapack GmbH, 8953 Dietikon (CH)
(72) Erfinder: HUBER, Hans, CH-5607 Hägglingen (CH); TAKIDIS, Dimitrios, CH-8600 Zürich (CH); MENG, Michael, CH-5073 Gipf-Oberfrick (CH)
(74) Vertreter: Wegner, Hans
(86) Internationale Anmeldenummer: PCT/CH2015/000014
(87) Internationale Veröffentlichungsnummer: WO 2015/117255

(56) Entgegenhaltungen:
- EP-A2- 0 095 643
- GB-A- 1 161 827
- GB-A- 2 041 869
- GB-A- 2 481 724

## Beschreibung

Die Erfindung betrifft eine Umreifungseinrichtung einer Umreifungsvorrichtung zur Umreifung von Packgut mit einem Umreifungsband, insbesondere mit einem Kunststoffumreifungsband, die eine Bandvorschubeinrichtung zum Vorschub des Umreifungsbands während einer Bildung einer Bandschlaufe, einer Bandrückzugseinrichtung zum Rückzug des Umreifungsbands nach Bildung der Bandschlaufe, um das Umreifungsband an Packgut anzulegen, sowie mit einer Spanneinrichtung, mit der bei dem am Packgut anliegenden Umreifungsband eine Bandspannung steigerbar ist
Derartige Umreifungsvorrichtungen, wie sie auch durch die Erfindung betroffen sind, können als stationäre Anlage ausgebildet sein, die dazu benutzt wird, größere Packgüter oder zu einer Packguteinheit zusammengestellte mehrere einzelne Packgüter mit einem oder mehreren Bandumreifungen zu versehen. Die Bandumreifungen werden üblicherweise aus einem Band gebildet, das von einer Vorratsrolle abgezogen und als ringförmige Umreifung um das Packgut gelegt wird. Hierzu wird das Umreifungsband mit seinem freien Ende voraus in einen Kanal der Umreifungsvorrichtung geschossen, der das Packgut mit Abstand portalartig oder ringförmig umgibt. Üblicherweise wird sobald das Bandende eine bestimmte Stelle im Kanal erreicht hat, das Bandende geklemmt und das Band dann wieder zurückgezogen. Als Folge davon zieht sich die Schlaufe des Umreifungsbands zu und das Band gelangt aus dem Kanal in Anlage gegen das Packgut. Anschliessend wird das Band stramm gezogen und hierbei auf das Band eine Bandspannung aufgebracht, der Bandring bzw. die Bandschlaufe mit einem Verschluss versehen und von der Vorratsrolle abgetrennt. Als Umreifungsband werden sowohl metallische Bänder als auch Kunststoffbänder eingesetzt. Die Umreifungsvorrichtungen sind üblicherweise an die mit ihnen zu verwendeten Umreifungsbandtypen angepasst, insbesondere in Bezug auf die Verbindungseinrichtung, mit der zwei abschnittsweise übereinanderliegende Bandlagen der Umreifungsbänder unlösbar miteinander verbunden werden.

Bei vorbekannten Lösungen weist die Umreifungsvorrichtung in der Regel mehrere Rollen der Bandvorschubeinrichtung, der Bandrückzugseinrichtung und der Spanneinrichtung auf, die motorisch angetrieben sind, um durch Kontakt der Umfangsflächen der jeweils angetriebenen Rollen mit dem Umreifungsband die jeweils gewünschte Bandbewegung zu erzielen, nämlich den Bandvorschub, einen Bandrückzug oder ein Strammziehen durch das Spannrad. Diese drei Funktionskomponenten Bandvorschubeinrichtung, Bandrückzugseinrichtung und Spanneinrichtung benötigen üblicherweise eine Vielzahl an Komponenten, um die einzelnen Bewegungen auf das Band funktionssicher aufzubringen. Durch diese baut die üblicherweise als Umreifungskopf ausgebildete Umreifungseinrichtung relativ gross und benötigt in der Umreifungsvorrichtung ein grosses Volumen. Zudem ergibt sich dadurch ein hohes Gewicht der Umreifungseinrichtung.

Aus der GB-A-2 041 869 ist eine Vorrichtung zum Zuführen und Festziehen eines Bands um ein Paket in einer Umreifungsmaschine bekannt. Die Vorrichtung weist eine Zuführrolle mit einer äußeren peripheren Oberfläche mit geringer Reibung auf, die mit einer äußeren peripheren Oberfläche einer Umkehrrolle in Kontakt gebracht wird. Drehzahlverhältnisse bei den unterschiedlichen Betriebsmodi der eingesetzten Rollen möglich. Der Erfindung liegt deshalb die Aufgabe zugrunde, eine Umreifungsvorrichtung zur Umreifung von Packgut mit einem Umreifungsband dahingehend zu verbessern, dass der Umreifungskopf möglichst kompakt ausgebildet werden kann. Diese Aufgabe wird bei einer Umreifungseinrichtung der eingangs genannten Art durch nur einen Motor zum Antrieb der in der Bandvorschubeinrichtung, der Bandrückzugseinrichtung and der Spanneinrichtung rotativ motorisch angetriebenen Rollen gelöst. Durch die Reduktion der unmittelbar für die Erzeugung der Bandbewegungen vorgesehenen Anzahl an Motoren auf nur noch einen Motor, kann die erfindungsgemässe Umreifungseinrichtung nicht nur kompakter realisiert werden, es kann hierdurch auch eine Steigerung der Funktionssicherheit and eine Reduzierung des Wartungsbedarfs erfindungsgemässer Umreifungseinrichtungen einhergehen, die üblicherweise als Umreifungsköpfe von stationären Umreifungsvorrichtungen ausgebildet sind. Im Zusammenhang mit der vorliegenden Erfindung kann unter "Motor" jeder Antrieb verstanden werden mit dem sich eine Bandbewegung einschliesslich minimaler Bandverschiebelängen zur Erzeugung einer erhöhten Bandspannung erzielen lassen. Vielfach werden solche Motoren als Elektromotoren ausgebildet, es können aber im Zusammenhang mit der Erfindung auch pneumatische, hydraulische oder andere Antriebe vorgesehen sein.

In einer zweckmässigen erfindungsgemässen Ausgestaltung kann vorgesehen sein, dass mit dem nur einen Motor jeweils eine Rolle der Spanneinrichtung, eine Rolle der Bandvorschubeinrichtung und eine Rolle der Bandrückzugseinrichtung antreibbar ist. Sämtliche drei Funktionseinheiten sollten somit mit dem einen Antriebsmotor starr (im Sinne von unlösbar) wirkverbunden oder wirkverbindbar sein. Letzteres kann beispielsweise durch einen oder durch mehrere Freiläufe oder Kupplungen realisiert sein, durch die die jeweilige Wirkverbindung zu einer oder zu mehreren der Funktionseinheiten bei Bedarf zeitweise aufhebbar und wieder erzeugbar ist. In einer bevorzugten Ausführungsform können jedoch auch keine schaltbaren Kupplungen oder Freiläufe vorgesehen sein, wodurch

Eine weitere bevorzugte Ausführungsform der Erfindung - die auch unabhängig von der Anzahl der zur Aufbringung von Bewegungen auf das Band eingesetzten Rädern, Rollen und Motoren sowie von der Ausgestaltung des Spannrads selbständige Bedeutung haben kann - kann ein betätigbares Mittel vorsehen, mit dem zumindest ein Rad eines Räderpaars der Vorschubeinrichtung in einen Zustand schaltbar ist, in dem das Umreifungsband, ohne Übertragung einer entsprechenden motorischen Antriebsbewegung auf das Umreifungsband, in einer zur Bandvorschubbewegung entgegen gesetzten Richtung zwischen dem Räderpaar verschiebbar ist. Mit der Erfindung wird somit vorgesehen, den Zustand des Räderpaars von einem das Band zwischen sich klemmenden Zustand, der insbesondere den Bandvorschub ermöglicht, in einen Zustand zu verändern, in dem das Band sich unabhängig von einer angetriebenen Bewegung von einem Rad des Räderpaars, zwischen dem Räderpaar hindurchbewegen kann. Erfindungsgemäss wird der zur Übertragung einer motorischen Antriebsbewegung über eines der beiden Räder auf das Umreifungsband vorgesehene Klemmzustand zwischen dem Räderpaar zumindest insoweit reduziert, das zwischen dem Band und dem Räderpaar sich Schlupf oder ein vergrösserter Spalt einstellen kann. Sofern bei einer Aufhebung der Klemmwirkung ein vergrösserter Spalt zwischen den Umfangsflächen der Räder erzeugt wird, sollte dieser Spalt vorzugsweise grösser als die Banddicke sein. Die Klemmwirkung kann beispielsweise bereits dadurch reduziert werden, dass eine Druckkraft, mit der die beiden Räder gegeneinander gedrückt werden, reduziert wird, beispielsweise durch eine veränderbar einstellbare Grösse dieser Druckkraft. Eine solche Reduzierung der Klemmwirkung kann bereits ausreichend sein, damit sich ein Umreifungsband von sich aus zwischen dem Räderpaar bewegen kann.

Eine Möglichkeit zur Bewegung des Umreifungsbands zwischen den Rädern des Räderpaars kann aber alternativ auch dadurch erreicht werden, dass eine Wirkverbindung zwischen einem angetriebenen Rad und seinem Antrieb aufgehoben wird, so dass beide Räder des Räderpaars frei und ohne Haltemoment der Antriebseinrichtung drehbar sind. Eine solche Aufhebung einer Wirkverbindung kann beispielsweise mittels einer schaltbaren Kupplung im Antriebsstrang des angetriebenen Rads vorgenommen werden. Mit dieser schaltbaren Kupplung kann vorzugsweise auch die Wirkverbindung wieder hergestellt werden, um nachfolgend wieder eine Antriebsbewegung von der angetriebenen Rolle auf das Umreifungsband aufzubringen, insbesondere eine Bandrückzugsbewegung.

Durch eine freie Drehbarkeit des Räderpaars, oder zumindest Schlupf oder vorzugsweise einem ausreichend großen Spalt zwischen den Rädern, wird es dem Umreifungsband ermöglicht, überschüssige Bandlänge der Bandschlaufe unmittelbar nach oder bereits während der Entstehung der Bandschlaufe wieder zwischen dem Räderpaar hindurch abzubauen, wodurch eine Wellenbildung möglichst vermieden werden soll. Eine beginnende überschüssige Bandlänge im Umreifungskanal führt zu Stauchungen in der Bandschlaufe und damit zu Druck- und/oder Biegespannungen im Umreifungsband. Übliche Umreifungsbänder weisen eine Biegesteifigkeit auf, die solchen Bändern die Tendenz verleihen, Druck- und Biegespannungen dadurch abzubauen, dass sie sich in eine Möglichkeit ebene und geradlinig verlaufende Ausrichtung begeben. Dies wird durch die Erfindung in vorteilhafter Weise dadurch genutzt, dass durch die Schaffung einer Bewegungsmöglichkeit des Bandes zwischen dem Räderpaar hindurch, aufgrund der Bandselbstentspannung überschüssige Bandlänge sich insbesondere von alleine zwischen den Rädern wieder aus dem Bandkanal herausbewegen kann.

In einer bevorzugten Weiterbildung gemäss diesem weiteren Aspekt der Erfindung kann eine Umreifungeinrichtung, wie sie beispielsweise im Oberbegriff von Anspruch 1 beschrieben ist, bei welcher eine Vorschubbewegung des Bands zur Bandschlaufenbildung durch die Umreifungseinrichtung vorgesehen ist und hierbei das Band zwischen einer motorisch angetriebenen Rolle und einer Gegenrolle eingeklemmt wird, eine Lüfteinrichtung vorgesehen sein. Gemäss diesem Aspekt der Erfindung, kann bei einer Umreifungseinrichtung die Lüfteinrichtung zur Ausführung eines Lüftvorgangs zwischen der angetriebenen Rolle und ihrer Gegenrolle vorgesehen sein, durch den ein Abstand zwischen der angetriebenen Rolle und ihrer Gegenrolle erzeugt bzw. vergrössert und anschliessend wieder verkleinert wird. In diesem Zusammenhang kann deshalb unter "lüften" die Erzeugung eines Abstands verstanden werden.

Mit dieser Massnahme gemäss dieses weiteren Aspekts der Erfindung, ist es möglich, eine sich bisher nach Abschluss des Bandvorschubvorgangs bei hoher Bandvorschubgeschwindigkeit oftmals ergebende Wellenbildung in der Bandschlinge oder -schlaufe, insbesondere im Bereich einer Bandantriebseinrichtung der Umreifungseinrichtung, zumindest weitestgehend zu vermeiden, die zu Funktionsstörungen der Umreifungseinrichtung führen kann. Überschüssiges Band kann sich durch den aufgrund des Lüftvorgangs vergrösserten Spalt zwischen den beiden Rollen von alleine wieder in Richtung zum Bandvorrat bewegen. Eine solche Rückbewegung eines Bandabschnitts durch den vergrösserten Spalt zwischen den beiden Rollen hindurch, kann insbesondere aufgrund des im Band wegen des zuvor erfolgten Bandvorschubs vorhandenen Impulses bzw. der Bewegungsenergie und der Biegesteifigkeit des Bands von selbst erfolgen, ohne dass hierfür die Aufbringung einer entsprechenden motorisch erzeugten gleichgerichteten Antriebsbewegung auf das Band erforderlich wäre.

Mit Vorteil kann der Lüftvorgang zwischen den beiden Rollen vor dem mit motorischer Antriebsbewegung bewirkten Bandrückzugsvorgang wieder aufgehoben und die beiden Rollen wieder gegeneinander in Anlage gebracht werden. Der Lüftvorgang erfolgt somit vorzugsweise zeitlich zwischen dem Bandvorschub- und dem Bandrückzugsvorgang. Eine zeitliche Überschneidung zwischen dem Bandvorschub-und/oder dem Bandrückzugsvorgang einerseits sowie dem Lüftvorgang andererseits ist hierbei möglich, aber nicht erforderlich.

In einer weiteren günstigen Ausgestaltung der Erfindung gemäss diesem Aspekt, kann die nicht motorisch angetriebene Gegenrolle auf einem drehbaren Exzenter angeordnet sein. Die Lüfteinrichtung kann hier auf den Exzenter einwirken, um durch Drehung des Exzenters und der Exzentrizität einen Spalt zwischen den beiden Rollen zu erzeugen, der grösser ist als die Banddicke. Nach Abschluss des Lüftvorgangs kann der Exzenter wieder in dann entgegen gesetzte Richtung zurückgedreht werden, wodurch die beiden Rollen wieder das Band zwischen sich einklemmen und mit den beiden Rollen nun ein Bandrückzugsvorgang erfolgen kann. Diese bevorzugte Ausführungsform der Erfindung hat unter anderem den Vorteil, dass mittels eines Exzenters mit vergleichsweise geringem erforderlichem Bauraum, eine schnelle Bewegung der Gegenrolle zur Erzeugung eines Abstands zur angetriebenen Rolle sowie wieder eine Zustellung zur angetriebenen Rolle möglich ist. In anderen Ausführungsformen der Erfindung kann der Abstand zwischen den beiden Rollen für den Lüftvorgang selbstverständlich auch auf andere Weise erfolgen, beispielsweise durch eine Schwenkbewegung oder eine lineare Bewegung von zumindest einer der beiden Rollen.

In einer weiteren zweckmässigen Ausgestaltung der Erfindung kann vorgesehen sein, dass die Lüftbewegung durch ein linear bewegbares angetriebenes Element, wie beispielweise ein Hubkolben, erfolgt. Derartige Hubelemente, sind in vielfacher Weise und mit unterschiedlichen Antriebsprinzipien verfügbar. Es lassen sich mit solchen die Antriebsbewegung besonders funktionssichere Lüfteinrichtungen bilden. Zudem ist es mit solchen Antriebselementen auch mit vergleichsweise geringem Aufwand möglich, bereits bestehende Umreifungsvorrichtungen mit einer Lüfteinrichtung nachzurüsten.

Weitere bevorzugte Ausgestaltungen der Erfindung ergeben sich aus den Ansprüchen, der Beschreibung und der Zeichnung. Der Offenbarungsgehalt der Patentansprüche wird hiermit durch Bezugnahme in die Beschreibung mit aufgenommen. Die Erfindung wird anhand von in den Figuren rein schematisch dargestellten Ausführungsbeispielen nachfolgend näher erläutert, es zeigen:
Die Erfindung wird anhand von in den Figuren rein schematisch dargestellten Ausführungsbeispielen näher erläutert, es zeigen:
- Fig. 1: eine stark schematisierte Darstellung einer erfindungsgemässen Umreifungsvorrichtung, die mit einem erfindungsgemässen Umreifungskopf versehen ist;
- Fig. 2: eine perspektivische Darstellung eines erfindungsgemässen Umreifungskopfs;
- Fig. 3: eine perspektivische Darstellung von oben des in eine Bandführung einer Umreifungsvorrichtung integrierten Umreifungskopfs aus Fig. 2;
- Fig. 4: eine Seitenansicht auf den Umreifungskopf aus Fig. 2, bei dem sich eine Komponente in einer ausgeschwenkten Serviceposition befindet;
- Fig. 5: eine perspektivische Teildarstellung des Umreifungskopfs aus Fig. 2, mit einer Darstellung der Bandantriebseinrichtung;
- Fig. 6: eine Vorderansicht auf die Bandantriebseinrichtung aus Fig. 5;
- Fig. 7: eine perspektivische Darstellung eines erfindungsgemässen Spannrads mit einer Teildarstellung der Rändelung der Umfangsfläche des Spannrads;
- Fig. 8: eine Vorderansicht auf das Spannrad aus Fig. 7;
- Fig. 9: eine Querschnittsdarstellung des Spannrads entlang einer Durchmesserlinie;
- Fig. 10: eine Komponente eines Hebelgetriebes für eine Gegenrolle der Bandantriebseinrichtung;
- Fig. 11: eine weitere Komponente des Hebelgetriebes der Gegenrolle in einer perspektivischen Darstellung;
- Fig. 12: die Komponente aus Fig. 11 in einer Vorderansicht;
- Fig. 13: eine Schnittdarstellung der Komponente aus Fig. 11 und 12;
- Fig. 14: eine explosionsartige Darstellung eines weiteren bevorzugten Ausführungsbeispiels eines Spannrads;
- Fig. 15: eine perspektivische Darstellung des Spannrads aus Fig. 14;
- Fg. 16: eine Vorderansicht des Spannrads aus Fig. 14 und 15;
- Fig. 17: eine Schnittdarstellung des Spannrads aus Fig. 14-16;
- Fig. 18: ein weiteres Ausführungsbeispiel für eine erfindungsgemässe Bandantriebseinrichtung mit einer Lüfteinrichtung in einer Teildarstellung eines Umreifungskopfs;
- Fig. 19: die Bandantriebseinrichtung aus Fig. 18 in einer Darstellung, in der eine Gegenrolle von der mit ihr zusammenwirkenden angetriebenen Rolle gefüftet ist.

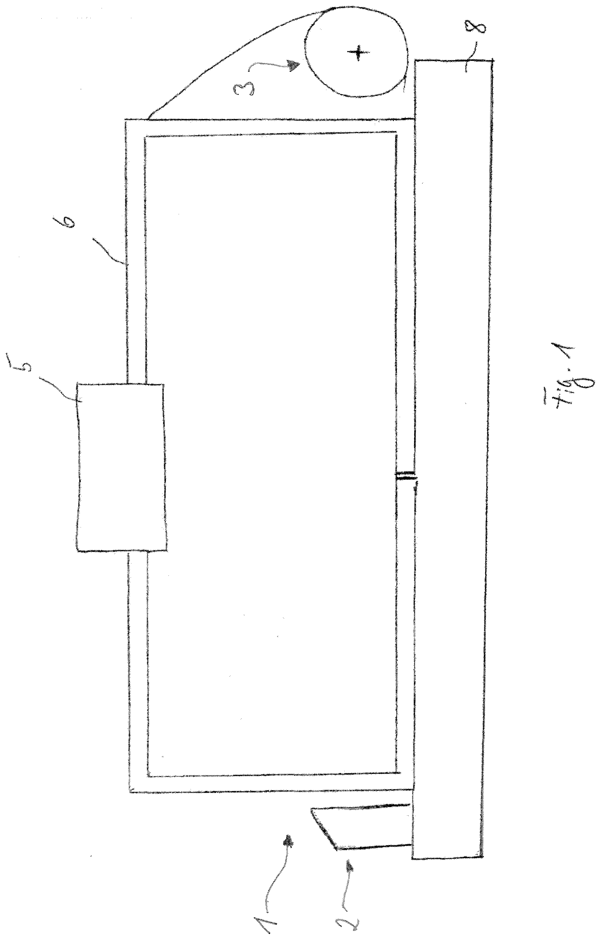

In Fig. 1 ist eine Umreifungsvorrichtung 1 gezeigt, die mit einer Steuerung 2, einer Vorratseinrichtung 3 zur Bevorratung und zum Verfügungsstellen eines Umreifungsbandes, sowie mit einem Umreifungskopf 5 versehen ist. Der Umreifungskopf 5 dient unter anderem zur Erzeugung einer Vorschub- sowie zur Erzeugung einer Rückzugsbewegung des Umreifungsbandes. Er ist ausserdem mit einer Spanneinrichtung, zur Aufbringung einer Bandspannung auf eine Bandschlaufe, sowie eine Verschlusseinrichtung zur Erzeugung eines Verschlusses am Umreifungsband, versehen. Zudem weist die Umreifungsvorrichtung eine Bandführung 6 auf, mit der das Band maschinell und automatisch auf einem vorgegebenen Weg um ein Packgut 7 gelegt werden kann. In den Umreifungskopf 5 ist zudem eine Schweiss- und Klemmeinheit 16 integriert. Bis auf den Umreifungskopf 5 handelt es sich hierbei um an sich bekannte Komponenten von Umreifungsvorrichtungen.

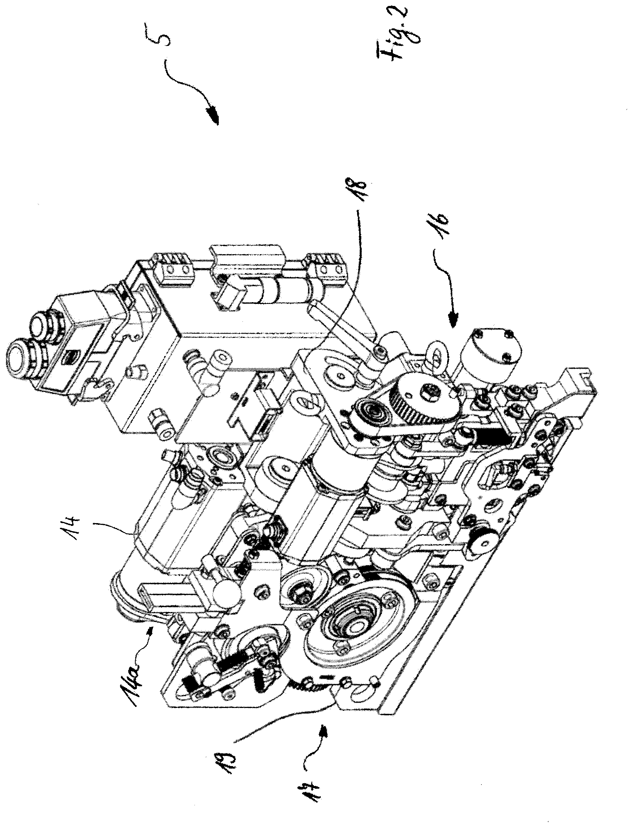

Der zusammen mit der Bandführung 6 auf einem Gestell 8 angeordnete und in Fig. 2 separat dargestellte Umreifungskopf 5 weist eine Bandantriebseinrichtung 15 auf. Bandantriebseinrichtungen sind grundsätzlich vorbekannt, weshalb nachfolgend im wesentlichen auf die Unterschiede zu vorbekannten Bandantriebseinrichtungen eingegangen wird. Die Bandantriebseinrichtung gemäss dieses Ausführungsbeispiels kann insbesondere mit einem oder mit mehreren Rollenpaaren 11, 12; 13 sowie eventuell mit weiteren einzelnen Umlenkrollen versehen sein. Letztere nehmen jedoch an der Erzeugung der Bandbewegung nicht teil und sind nur für die Bestimmung der Bandverlaufsrichtung vorgesehen. Von den im Ausführungsbeispiel drei Rollen 11, 12, 13, welche die Bandbewegungen erzeugen, sollte zumindest eine der Rollen 11, 12, 13 zur Erzeugung einer Bandvorschub- bzw. Bandrückschubbewegung motorisch angetrieben sein. Es sollte dabei vorzugsweise jeweils eine Rolle 11, 12, 13 der aus diesen Rollen gebildeten Rollenpaaren angetrieben sein, zwischen denen das Umreifungsband durchgeführt und dabei eine Vorschub-, Rückzugs- oder Spannbewegung sowie gegebenenfalls eine Entspananbewegung auf das Band übertragen wird.

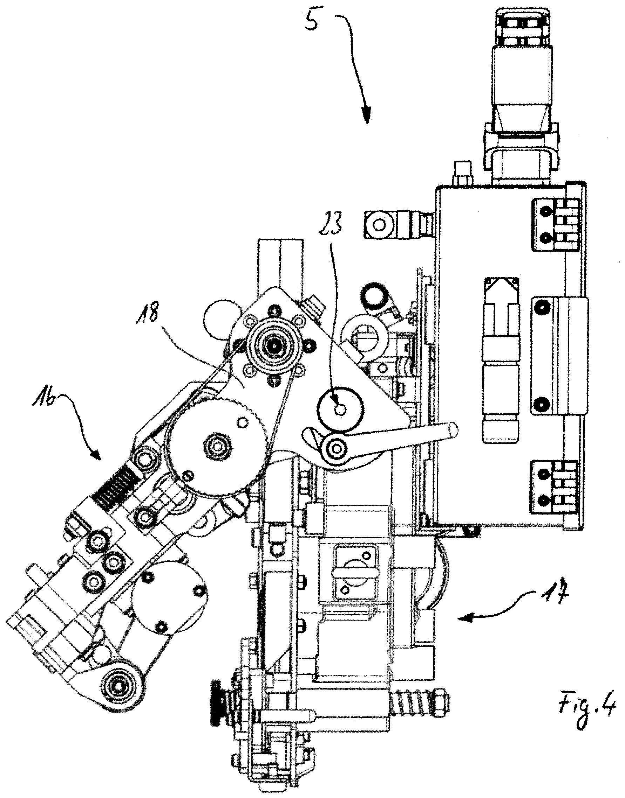

Der Umreifungskopf 5 weist zwei Komponenten auf, eine Steuerungskomponente 16 und eine Bandhandhabungskomponente 17. Im Ausführungsbeispiel hat die Steuerungskomponente 16 ausser der Ausführung von Steuerungsfunktionen für die Komponenten der Umreifungseinrichtung noch weitere Funktionen, beispielsweise die Erzeugung von Verschlüssen zwischen den zwei Bandlagen einer Umreifung sowie das Abtrennen des Umreifungsbands vom Bandvorrat. Die Steuerungskomponente 16 ist dabei auf einem Teilträger 18 des Umreifungskopfs montiert, wobei der Teilträger 18 wiederum an einem gemeinsamen Hauptträger 19 des Umreifungskopfs 5 lösbar befestigt ist. Wie insbesondere aus Fig. 4 hervorgeht, ist der Teilträger 18 der Steuerungskomponente 16 um eine Achse 23 schwenkbar. Die Elemente der Bandhandhabungskomponente 17 sind ohne eigenen Teilträger direkt am Hauptträger 19 des Umreifungskopfs befestigt. Im Ausführungsbeispiel ist die Steuerungskomponente 16 im wesentlichen zur Ausführung von Steuerungs- und Koordinierungsfunktionen der mit dem Umreifungskopf ausgeführten Funktionen vorgesehen. Die Bandhandhabungskomponente 17 und die an ihr angebrachten Komponenten sind hingegen zur unmittelbaren Einwirkung auf das Umreifungsband vorgesehen.

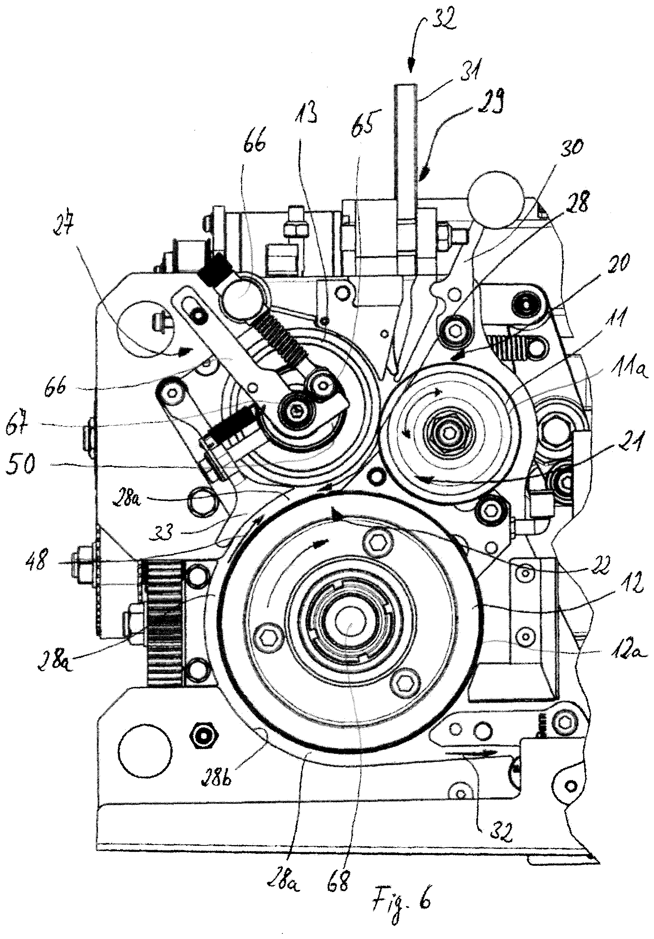

In die Bandhandhabungskomponente 17 des Umreifungskopfs 5 ist eine Bandvorschubeinrichtung 20, eine Bandrückzugseinrichtung 21 sowie eine Spanneinrichtung 22 integriert. Gemäss des hier gezeigten Ausführungsbeispiels sind für die Bandvorschub-, Bandrückzugs- und die Spanneinrichtung 20, 21, 22 gemeinsame Rollen 11, 12; 13 vorgesehen. Von den insgesamt nur drei Rollen 11, 12, 13 sind zwei Rollen 11, 12 motorisch angetriebene Rollen. Die beiden Rollen 11, 12 werden mit dem gleichen (nur einen) Motor 14, im Ausführungsbeispiel einem Elektromotor, angetrieben. Hierzu kann beispielsweise von dem gemeinsamen Motor 14 jeweils ein Antriebsstrang zu einer der beiden Rollen 11, 12 geführt sein. Die Rolle 11 ist hierbei sowohl als Antriebsrad für den Bandvorschub (Bandvorschubsrad) als auch als Antriebsrad für den Bandrückzug (Bandrückzugsrad) vorgesehen. Um im dargestellten Ausführungsbeispiel diese beiden Funktionen mit nur einem Rad ausführen zu können, ist die Rolle 11 mit dem gleichen Antriebsmotor 14 in beide Drehrichtungen antreibbar. In der Darstellung von Fig. 6 ist dabei die Drehrichtung entgegen des Uhrzeigersinns die Bandvorschubrichtung und die Drehrichtung im Uhrzeigersinn die Bandrückzugrichtung. Wie in Fig. 2 gezeigt ist, wird vom gemeinsamen Motor 14 mittels einer Getriebeeinrichtung die motorische Antriebsbewegung auf beide Räder bzw. Rollen 11, 12 übertragen. Im vorliegenden Ausführungsbeispiel umfasst die Getriebeeinrichtung 14a ein Zahnriemengetriebe, das die Antriebsbewegung von der Motorwelle auf eine zur Motorwelle parallel verlaufende weitere Welle überträgt. Auf dieser weiteren Welle sind zwei Zahnräder angeordnet, die je zu einem weiteren von zwei Teilgetrieben der Getriebeeinrichtung gehören. Von einem dieser beiden Teilgetrieben der Getriebeeinrichtung wird die motorische Antriebsbewegung auf die Rolle bzw. das Rad 11 und vom anderen Teilgetriebe auf das Spannrad 12 übertragen. Je nach Drehrichtung der Motorwelle drehen somit im Ausführungsbeispiel sowohl das Spannrad 12 als auch das Rad 11 in unterschiedliche Drehrichtungen.

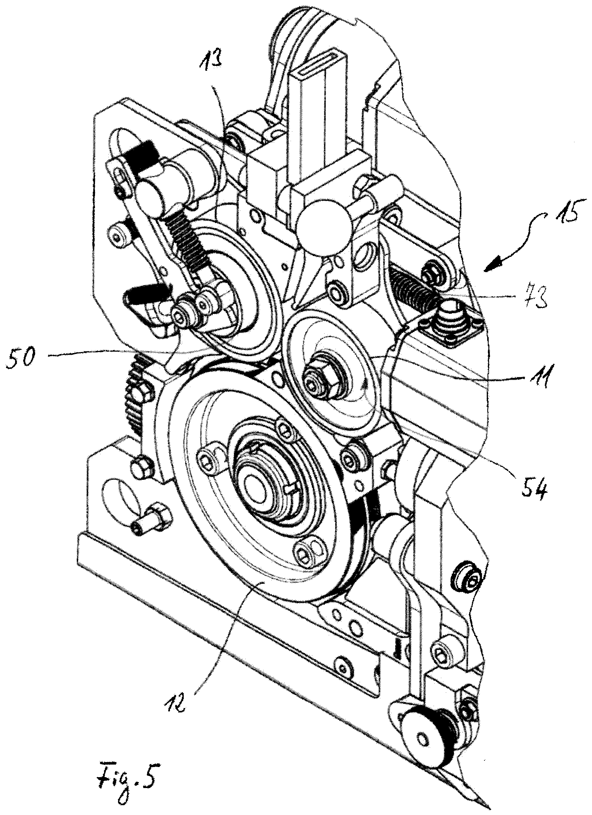

In der in Fig. 5, 6 wiedergegebenen Einbaulage des Umreifungskopfs ist die Rolle 11 oberhalb der Rolle 12 angeordnet. Die Rolle 12 ist Bestandteil der Spanneinrichtung 22 und hat die Funktion des Spannrads. Sie weist einen deutlich größeren Durchmesser als die Rolle 11 auf. Das Spannrad 12 ist aufgrund der starren Verbindung mit dem Motor 14 und der vom Motor ausgeführten Antriebsbewegungen in beiden Drehrichtungen, ebenfalls in beide Drehrichtungen antreibbar. Für die Aufbringung der vorgesehenen Bandspannung auf das Umreifungsband, insbesondere auf die Bandschlaufe, wird vom Spannrad jedoch nur die Antriebsbewegung in Spannrichtung genutzt, d.h. bezogen auf die Darstellung von Fig. 6 die Drehrichtung im Uhrzeigerrichtung. In bevorzugten Ausführungsformen kann durch eine dem Spannvorgang nachfolgende und zur Drehrichtung beim Spannvorgang entgegengesetzte Rotationsbewegung des Spannrads eine Entspannung des sich im Umreifungskopf befindlichen und nicht mehr zur Bandschlaufe gehörenden Bandabschnitts stattfinden. Die Antriebsbewegungen sowohl für die Spannbewegung als auch für die Entspannbewegung stammen vom gleichen Antriebsmotor wie für die Rolle 11. Als Alternative zum hier dargestellten Ausführungsbeispiel der Erfindung kann in anderen Ausführungsformen im nicht näher dargestellten Antriebsstrang vom Motor zu den beiden Rollen 11, 12 eine schaltbare Kupplung vorgesehen, mit der die Antriebsbewegung entweder auf die Rolle 11 oder die Rolle 12 geleitet werden kann. Neben Ausführungsformen in denen das Spannrad wiederum in beide Drehrichtungen antreibbar ist, kann auch vorgesehen sein, dass das Spannrad auch nur in die die für den Spannvorgang vorgesehene Drehrichtung antreibbar ist.

Wie der Darstellung von Fig. 6 zu entnehmen ist, ist die Rolle 13 sowohl zur Rolle 11 als auch zum Spannrad 12 benachbart. Die Rolle 13 ist rotativ nicht angetrieben und mittels einer Schwenkeinrichtung schwenkbar angelenkt. Die Schwenkeinrichtung ist mit einem Antrieb wirkverbunden, durch welche die Rolle (motorisch) angetriebene Schwenkbewegungen ausführen kann. Durch die Schwenkbewegung kann die als Gegenrolle fungierende Rolle 13 entweder in Anlage gegen die Rolle 11 oder in Anlage gegen das Spannrad 12 gebracht werden, wobei sich in der jeweiligen Endlage der schwenkbaren Rolle 13 jeweils das Umreifungsband zwischen einer der Rollen 11, 12 und der Rolle 13 befindet. Je nachdem, gegen welche der Rollen 11, 12 die Gegenrolle 13 anliegt, drückt die Gegenrolle 13 das Band dann an die entsprechende Rolle 11, 12, so dass die entsprechende Rolle 11, 12 ihre Rotationsbewegung möglichst schlupffrei als Vorschub-, Rückzug- oder Spannbewegung sowie gegebenenfalls als Entspannbewegung auf das Umreifungsband übertragen kann. Die Gegenrolle 13 ist somit zusammen mit der Rolle 11 sowohl Bestandteil der Bandvorschub- als auch Bestandteil der Bandrückzugseinrichtung. Zusammen mit dem Spannrad 12 ist die Gegenrolle 13 auch Bestandteil der Spanneinrichtung 22. Durch diese bevorzugte erfindungsgemässe Ausgestaltung kann die bisher bei vorbekannten Lösungen übliche vierte Rolle vermieden werden. Bei diesen vorbekannten Lösungen sind der Antriebsrolle und dem Spannrad jeweils eine von zwei Gegenrollen fest zugeordnet. Die bevorzugte erfindungsgemässe 3-Rollen Lösung kann demgegenüber eine deutlich kompaktere Ausgestaltung ermöglichen.

Die Rollen 11, 12, 13 sind im Umreifungskopf 5 zudem Bestandteil eines Bandführungskanals 28, durch den der Verlauf sowie der Vor- und Rückzugsweg des Bands vorbestimmt wird. Der Bandführungskanal 28 ist wiederum Teil der Bandführung 6. Wie in Fig.6 zu erkennen ist, weist der Umreifungskopf 5 eine erste Schnittstelle 29 auf, an der sich der Umreifungskopf 5 an die Vorratsrollenseite der Bandführung anschliesst. Das hier ausgebildete eine Ende des Bandführungskanals 28 ist als Schnellwechselschnittstelle ausgebildet. Diese weist ein mittels eines schwenkbaren Klemmhebels 30 an den Umreifungskopf klemmbares Kanalstück 31 auf, durch den das Band in den Umreifungskopf zugeführt wird. Das Kanalstück 31 endet unmittelbar vor der Umfangsfläche 11a der Rolle 11, so dass das Umreifungsband zumindest näherungsweise tangential zur Umfangsfläche 11a der Rolle 11 zugeführt werden kann. Befindet sich die die Rolle 13 in ihrer zur Rolle 11 geschwenkten Endposition, so wird das Band zwischen den Rollen 11, 13 hindurchgeführt, wobei die Rolle 13 das Band gegen die Rolle 11 drückt.

In Bandvorschubrichtung 32 gesehen, gelangt das Band im seinem weiteren Verlauf zum Spannrad 12. Hier ist von der Gegenrolle 13 ausgehend, durch geeignete Kanalbildungsmittel ein sich über ungefähr 180° am Umfang des Spannrads 12 erstreckender kreisbogenförmigen Kanalabschnitt 28a gebildet. In Bezug auf die Banddicke ist der Kanalabschnitt 28a deutlich breiter ausgebildet als die Banddicke. Die innere Begrenzung des Kanalabschnitts wird durch den sich jeweils im Bereich des Kanalabschnitts befindenden Abschnitt der Umfangsfläche 12a des Spannrads 12 gebildet. Die in radialer Sicht äussere Begrenzung des Kanalabschnitts 28a weist Führungsbleche sowie ein zusammen mit der Gegenrolle 13 schwenkbares äusseres Kanalsegment auf, mit dem sich der äussere Kanalabschnitt geschlossen halten lässt, obwohl sich die schwenkbare Gegenrolle 13 im Bereich des äusseren Kanalabschnitts befindet. Ohne das schwenkbare Kanalsegment 33 oder eines gleichwirkenden anderen Elements würde sich zumindest in einer der beiden Schwenkendpositionen der Gegenrolle 13 eventuell eine offene Stelle des Kanalabschnitts ergeben, die sich in Bezug auf eine sichere Bandführung möglicherweise negativ auswirken könnte.

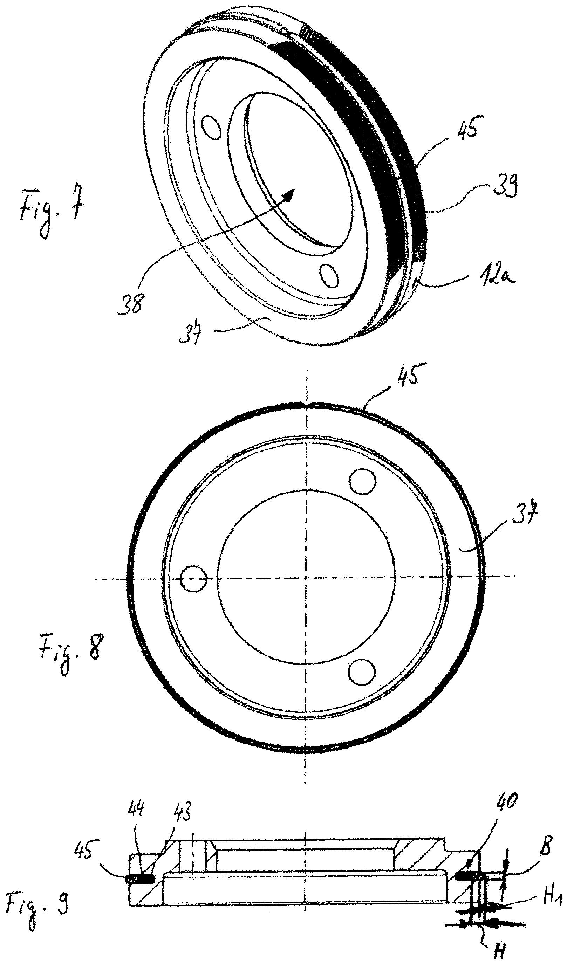

In den Fig. 7, 8, 9 ist das Spannrad in drei Darstellungen gezeigt. Dieses weist einen Ring 37 auf, der mit einer Ausnehmung 38 versehen ist, die zur Verbindung des Spannrads 12 mit einer Welle des Antriebs, insbesondere mit einer Welle eines Getriebes des Antriebs vorgesehen ist. In Fig. 2 ist das auf die Welle montierte Spannrad 12 gezeigt. Wie ebenfalls aus Fig. 6 hervorgeht, ist das kreisförmige Spannrad mit einer Umfangsfläche 12a mit zumindest im wesentlichen konstanter Breite versehen. Das Spannrad 12 ist an seiner Umfangsfläche 12a mit einer Rändelung oder Verzahnung 39 versehen, durch welche die Eingriffsverhältnisse des Spannrads 12 am Umreifungsband verbessert werden. Anstelle einer Rändelung oder Verzahnung 39 könnte auch jede andere geometrisch bestimmte oder unbestimmte Aufrauhung der Umfangsfläche 12a des Spannrads vorgesehen sein, mit der ein beim Spannvorgang möglicher Schlupf zwischen dem Spannrad und dem Umreifungsband zumindest weitestgehend verhindert werden kann.

Vorzugsweise zumindest in etwa mittig - in Bezug auf die Breite des Spannrads 12 - ist mit Abstand zu den seitlichen Rändern des Spannrads über den gesamten Umfang der Umfangsfläche 12a eine Nut 40 mit einer vergleichsweise geringen Breite eingebracht, die deutlich tiefer als breit ausgebildet ist. In der Nut 40 befinden sich im Ausführungsbeispiel zwei gummielastische O-Ringe 43, 44 übereinander, die in der Nut 40 radial hintereinander angeordnet sind. Hierbei ist einer der O-Ringe 43 mit einer geringeren und der andere O-Ringe 44 mit einem im Vergleich dazu grösseren Abstand zur Drehachse des Spannrads 12 angeordnet. Die Breite der O-Ringe 43, 44 ist dabei derart vorgesehen, dass sie in etwa der Breite der Nut 40 entsprechen. Die beiden O-Ringe 43, 44 befinden sich vollständig innerhalb der Nut 40. Beide O-Ringe 43, 44 sind aus gummielastischem Material gebildet.

Auf dem äusseren der beiden O-Ringe 43, 44 sitzt ein als Abstandselement vorgesehener Ring 45 auf, der im Ausführungsbeispiel aus einem metallischen Werkstoff gestaltet ist. Der Ring 45 ist in diesem Ausführungsbeispiel elastisch verformbar. Ebenso könnte der Ring im wesentlichen in sich starr oder formstabil ausgebildet sein. Um diese elastischen Eigenschaften des Rings zu erzielen, könnte der Ring 45 auch aus einem oder mehreren anderen Werkstoffen als einem metallischen Werkstoff gebildet sein, beispielsweise aus einem elastischen Kunststoff. Im Ausführungsbeispiel ist dieser Metallring 45 in Bezug auf seinen Querschnitt mit einer geringeren Breite B als Höhe H versehen. Die Höhe des O-Rings ist in Bezug auf die Nuttiefe und die Höhe der O-Ringe derart abgestimmt, dass der Ring mit einer Höhe H₁ aus der Nut 40 herausragt. Der Ring 45 steht damit in seinem in Fig. 9 gezeigten unbelasteten Zustand über die Umfangsfläche 12a des Spannrings 12 über, insbesondere über seinen gesamten Umfang bzw. über den gesamten Umfang des Spannrings 12.

Das Umreifungsband wird zu Beginn des Umreifungsvorgangs mit vorzugsweise hoher Geschwindigkeit vom Umreifungskopf 5 aus mit seinem freien Bandende voraus durch die Bandführung 6 geschoben. Hierzu befindet sich die Gegenrolle 13 in Anlage gegen die eine Seite des Bands. Das Band wird durch die Gegenrolle mit seiner anderen Seite gegen die motorisch angetriebene Rolle 11 gedrückt. Die rotatorische Antriebsbewegung der Rolle 11 in Vorschubrichtung wird hierdurch auf das Umreifungsband übertragen, was dessen Vorschubbewegung in Vorschubrichtung bewirkt. Das Band kommt hinter dem Auslaufbereich des Bands aus dem Spalt zwischen Rolle 11 und Gegenrolle 13 in Kontakt mit dem Spannrad 12, ohne aber auf das Spannrad 12 einen nennenswerten Druck auszuüben.

Nachdem das Band vollständig durch die Bandführung 6 durchgeschoben ist, erreicht das Bandende wieder den Verschlusskopf. Hier betätigt das Bandende einen Endschalter, wodurch die Vorschubbewegung gestoppt und das Bandende geklemmt wird. Diese sowie weitere Ein- und Ausschaltvorgänge von Komponenten des Verschlusskopfs werden durch die Steuerungskomponente 16 vorgenommen, die hierzu mit einer dem Grunde nach bekannten motorisch angetriebenen Nockenwellensteuerung versehen ist.

Nun setzt die Nockenwellensteuerung der Steuerungskomponente 16 die Rolle 11 in zur Vorschubrichtung umgekehrter Drehrichtung in Bewegung. Das weiterhin zwischen der Rolle 11 und der Gegenrolle 13 eingeklemmte Umreifungsband wird hierdurch in umgekehrter, also in Bandrückzugsrichtung 48, bewegt. Die Umfangslänge der Bandschlaufe, deren Bandende weiterhin eingeklemmt ist, wird hierdurch kontinuierlich verkürzt. Das Band wird hierdurch aus der Bandführung 6 gerissen und als Resultat davon um das jeweilige Packgut angelegt.

In Fig. 6 ist das Spannrad 12 während des Bandrückzugsvorgangs dargestellt. Wie dieser Darstellung zu entnehmen ist, gelangt während des Bandrückzugsvorgangs das Band in Anlage gegen das Spannrad 12. Das Umreifungsband liegt im wesenltichen über dem gesamten kreisbogenförmigen Kanalabschnitt 28a am Spannrad 12 an, ähnlich wie das auch beim erst nachfolgenden Spannvorgang der Fall ist. Das Band wird zwar hier zurückgezogen, aber aufgrund seiner Möglichkeit dieser Bewegung dadurch nachzugeben, dass es sich, wie vorgesehen, aus der Bandführung herausbewegt, wird während dieser Phase trotzdem nur eine vergleichweise geringe Bandspannung auf das Band der Bandschlaufe aufgebracht. Als Folge dieses Kontakts mit dem Spannrad 12 und des gegenüber der Umfangsfläche überstehenden Rings 45, liegt das Band nicht an der Umfangsfläche des Spannrads 12 sondern am sich in der Umfangsfläche 12a befindenden Ring 45 an. Dieser Kontakt mit dem im Ausführungsbeispiel hier als Ring 45 ausgebildeten Abstandselement führt dazu, dass das Band während des Bandrückzugs nicht durch die Rändelung oder Verzahnung 39 der Umfangsfläche 12a beschädigt werden kann.

Nachdem das Band durch den Bandrückzug an das Packgut angelegt ist, wird von der Steuerung von Bandrückzug auf Erzeugung einer Bandspannung umgeschaltet, wodurch das am Packgut anliegende Band stramm gezogen werden soll. Hierzu wird zunächst die Gegenrolle 13 von ihrer Anlageposition gegen die Rolle 11 in eine Anlageposition gegen das Spannrad 12 geschwenkt. Das in die gleiche Rotationsrichtung versetzte Spannrad 12 wie zuvor die Rolle 11, dreht mit geringerer Drehzahl aber dafür unter Einsatz eines grösseren Drehmoments und zieht weiter am Umreifungungsband. An die im Ausführungsbeispiel weiterhin angetriebene und sich schneller drehende Rolle 11 liegt aufgrund des fehlenden Drucks der Gegenrolle 13 das Band nun hingegen nicht mehr in einer Weise an, durch die die Rolle 11 ihre Bewegung auf das Band übertragen könnte. Da das Umreifungsband in diesem Stadium bereits gegen das Packgut anliegt, wird das Band durch das Spannrad 12 höchstens noch mit einer im Vergleich zur Bandrückzugsphase geringen Länge zurückgezogen. Während dieser Spannphase wird auf das Band vor allem eine grössere Bandspannung aufgebracht.

Bereits zu Beginn der Spannphase wird durch den Druck der Gegenrolle 13 in Richtung auf das Spannrad und das dazwischen befindliche Band, der Ring 45 in Richtung zum Nutgrund und damit auch in im wesentlichen radialer Richtung gesehen in Richtung auf die Drehachse des Spannrads 12 gedrückt. Hierdurch liegt bereits zu Beginn der Spannphase das Band gegen den Ring 45 an und drückt diesen ebenfalls zumindest im Bereich der Gegenrolle 13 in Richtung auf den Nutgrund. Der Ring 45 hat damit im Bereich der Gegenrolle 13 bereits zu Beginn des Spannvorgangs einen geringeren Abstand zur Drehachse des Spannrads als in seinem unbelasteten Zustand, beispielsweise während der Bandvorschub- oder der Bandrückzugsphase.

Das im weiteren Verlauf des Spannvorgangs vom Spannrad 12 auf das Band übertragene grössere Drehmoment im Vergleich zur Bandrückzugsphase der Rolle 11 hat eine größere Reaktionskraft des Bands zur Folge. Diese grössere Reaktionskraft führt nun dazu, dass das Band den Ring 45 nicht nur im Kontaktbereich mit der Gegenrolle 13, sondern über seine Kontaktlänge (Umschlingungswinkel, in Umfangsrichtung gesehen) mit dem Ring 45 in die Nut hineindrückt, wodurch das Band nun entlang seines Umschlingungswinkels am Spannrad 12 gegen dessen Umfangsfläche anliegt. Das Band drückt entlang seines Umschlingungswinkels am Spannrad den Ring gegen die Federkräfte der O-Ringe in die Nut hinein. In Abhängigkeit der Eigenschaften des Rings 45, verformt sich dieser hierdurch gegbenenfalls elastisch und kann entlang jenes Umfangsabschnitts, an dem das Umreifungsband nicht gegen das Spannrad anliegt, wieder teilweise (in Bezug auf seine Höhe) aus der Nut austreten. Ausserhalb des Umschlingungswinkels des Bands mit dem Spannrad, kann der Ring 45 hierbei in größerem Masse aus der Umfangsfläche hervorstehen, als im Vergleich zum unbelasteten Zustand, in dem er eine Höhe H₁ übersteht. Da der Ring rotationsfest in der Nut angeordnet ist, wird in Abhängigkeit der jeweiligen Rotationsposition des Spannrads 12, jede einzelne Stelle des Rings in alternierender Weise abwechselnd in die Nut 40 hineingedrückt und tritt wieder aus ihr heraus, bis sie aufgrund der Rotation des Spannrads wieder die Stelle erreicht, an der das Band einen Abschnitt der Umfangsfläche umschlingt und dadurch den Ring entlang dieses Abschnitts in die Nut hineindrückt. Somit kann trotz des vorhandenen Schutzes des Umreifungsbands vor einem Kontakt mit der Umfangsfläche des Spannrads während der Bandrückzugsphase trotzdem ein funktionssicherer Kontakt des Bands mit dem gleichen Spannrad während der Bandspannungsphase erreicht werden.

Die Gegenrolle 13 kann mit Vorteil mit unterschiedlichen Andruckkräften einerseits gegen die Rolle 11 (Vorschubrolle bzw. Rückzugsrolle) und andererseits gegen das Spannrad 12 gedrückt werden (im Einsatz der Umreifungseinrichtung jeweils mit dazwischenliegendem Umreifungsband). Im Vergleich zu den möglichen Andruckkräften gegen de Rolle 11 höhere Andruckkräfte gegen das Spannrad, können für eine hohe Funktionssicherheit und der Möglichkeit zur Aufbringung von hohen Bandspannungen auf das Umreifungsband von Vorteil sein. Nachfolgend wird deshalb erläutert, wie in einer bevorzugten Ausführungsform der Erfindung trotz der Schwenkbewegung der Gegenrolle 13 zwischen zwei Endpositionen in den Endposition unterschiedliche Andruckkräfte realisiert werden können.

Die Gegenrolle 13 ist hierzu auf einem Exzenter 50 angeordnet, der wiederum auf einer Welle 51 eines Trägers 52 angeordnet ist. Der Träger weist mit Abstand zur Welle 52 eine Aufnahme 53 auf, die zur Anordnung auf der Lagerstelle 54 der Rolle 11 vorgesehen ist (Fig. 5, 6). Die Aufnahme 53 ist hierbei um ihre Drehachse frei auf der Lagerstelle 54 der Rolle 11 drehbar und kann somit Schwenkbewegungen um ihre Drehachse ausführen.

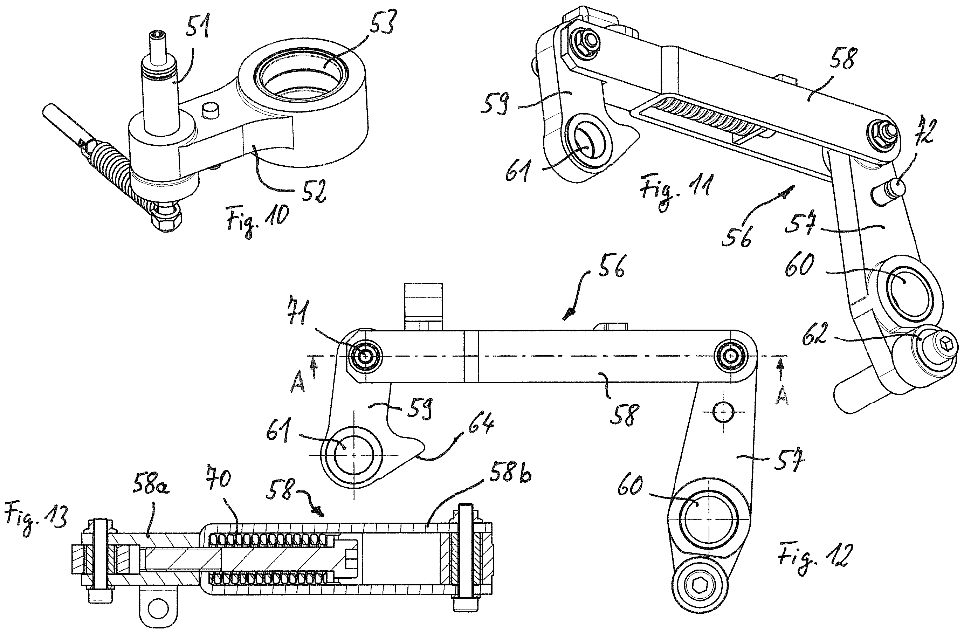

Im Bereich der Gegenrolle 13 und der Rolle 11 ist ein mehrere schwenkbar aneinander angelenkte Hebel 57, 58, 59 aufweisendes Parallelogramm vorgesehen. Das Parallelogramm 56 weist einen langen vertikalen Hebel 57, einen horizontalen Hebel 58 sowie einen kurzen vertikalen Hebel 59 auf. Das Parallelogramm ist am langen vertikalen Hebel 57 sowie am kurzen vertikalen Hebel 59 schwenkbar angelenkt. Die Hebel 57 sowie 59 weisen hierzu Schwenklagerstellen 60, 61 auf. Über eine Glockenkurve 62 kann auf den langen vertikalen Hebel 57 eine Rotationsbewegung übertragen werden, die zur Schwenkbewegung des Hebels 57 um seine Schwenkagerstelle 60 führt. In der Darstellung von Fig. 12 erfolgt die Schwenkbewegung des Hebels 57 im Uhrzeigersinn.

Der Hebel 58 zieht hierdurch an der Anlenkstelle des kurzen vertikalen Hebels letzteren auch in Richtung auf den Hebel 57 zu, wodurch sich der vertikale Hebel 59 in der Darstellung von Fig. 11, 12 ebenfalls im Uhrzeigersinn um seine Schwenklagerstelle 62 schwenkt. Eine am kurzen vertikalen Hebel 59 ausgebildete schräge Fläche 64 drückt hierdurch auf ein auf der Welle 51 angeordnetes Lager 51. Die schräge Fläche führt hierdurch eine Bewegung im Uhrzeigersinn (gemäß Darstellung von Fig. 12) aus und hat die Tendenz eine horizontale Ausrichtung einzunehmen. Hierdurch führt der Träger 52 eine Schwenkbewegung aus, wodurch die Gegenrolle 13 von ihrer Endposition gegen die Rolle 11 in Richtung auf das Spannrad 12 geschwenkt wird.

Bei Erreichen des Spannrads liegt die Gegenrolle gegen das Spannrad an und kann keine weitere Schwenkbewegung ausführen. Der Hebel 57 schwenkt jedoch weiter, wodurch die Lagerstelle 65 des Exzenters 50 im Gegenuhrzeigersinn in Richtung auf einen L-förmigen Träger 66 bewegt wird. Nachdem die Lagerstelle 65 gegen den L-förmigen Träger 65 drückt, stoppt die Bewegung der Lagerstelle 65 und diese befindet sich zumindest näherungsweise mit einer oberen Lagerstelle 66, der Rotationsachse 67 der Gegenrolle 13 sowie der Rotationsachse 68 des Spannrads 12 in einer Linie. Ein bisher die Andruckkraft der Gegenrolle 13 erzeugendes Federelement ist hierdurch nicht mehr wirksam.

Eine weitere Bewegung des Hebels 57 bei seiner Schwenkbewegung führt nun dazu, dass auch der Hebel 59 keine Bewegung mehr ausführen kann und deshalb zwei Teile 58a und 58b des horizontalen Hebels 58 auseinander gezogen werden. Ein sich zwischen den beiden Teilen 58a, 58b des Hebels angeordnetes Federelement 70 wird hierdurch komprimiert, wodurch dessen Federkraft steigt. Dies führt zu einem Drehmoment des Hebels 59 um die Schwenklagerstelle 61 mit dem Hebelarm des Abstands der Schwenklagerstelle 61 von der Anlenkstelle 71 des Hebels 58 am Hebel 59. In der Folge drückt die schräge Fläche 64 in Form eines Drehmoments um die Schwenklagerstelle 61 auf das Lager, was nun zu einer Andrückkraft der Rolle 13 gegen das Spannrad führt. Durch ein entsprechend dimensioniertes und ausgelegtes Federelement 70 sowie entsprechender Hebelverhältnisse können hierdurch hohe Andrückkräfte der Rolle 13 gegen das Spannrad erreicht werden.

Eine Rückstellung des Parallelogramms kann durch eine am Zapfen 72 des Hebels 5 angeordnete weitere Feder 73 erfolgen.

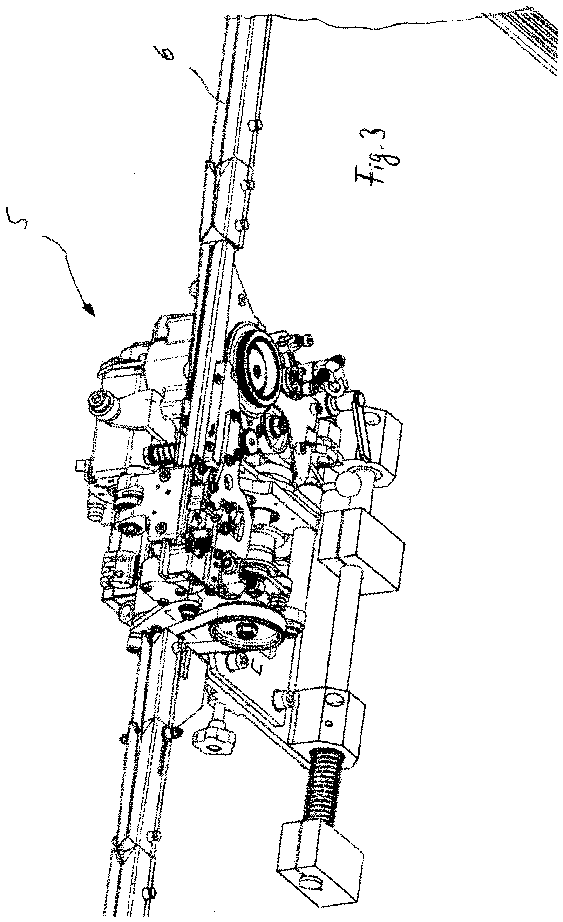

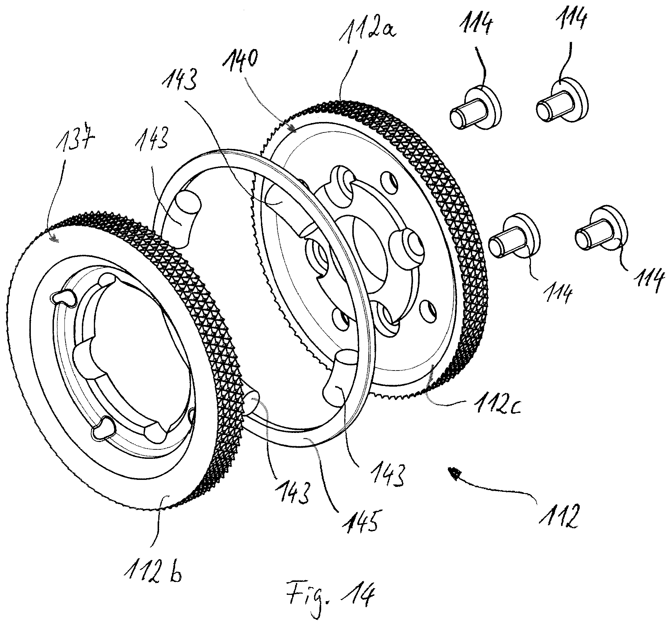

Nachfolgend werden alternative Ausführungsformen von vorstehend erörterten Bauteilen und Baugruppen beschrieben. Es wird hierbei im Wesentlichen lediglich auf Unterschiede zu den entsprechenden Bauteilen aus den Fig. 1 bis 13 eingegangen. Soweit bei diesen Ausführungsformen identische oder ähnliche Ausgestaltungen wie bei dem Ausführungsbeispiel der Fig. 1 bis 13 gegeben, wird darauf nachfolgend nicht näher eingegangen, der Offenbarungsgehalt der Ausführungsbeispiele der Fig. 1 bis 13 wird jedoch durch Bezugnahme auch für die Ausführungsbeispiele der Fig. 14 bis - 19 aufgenommen.

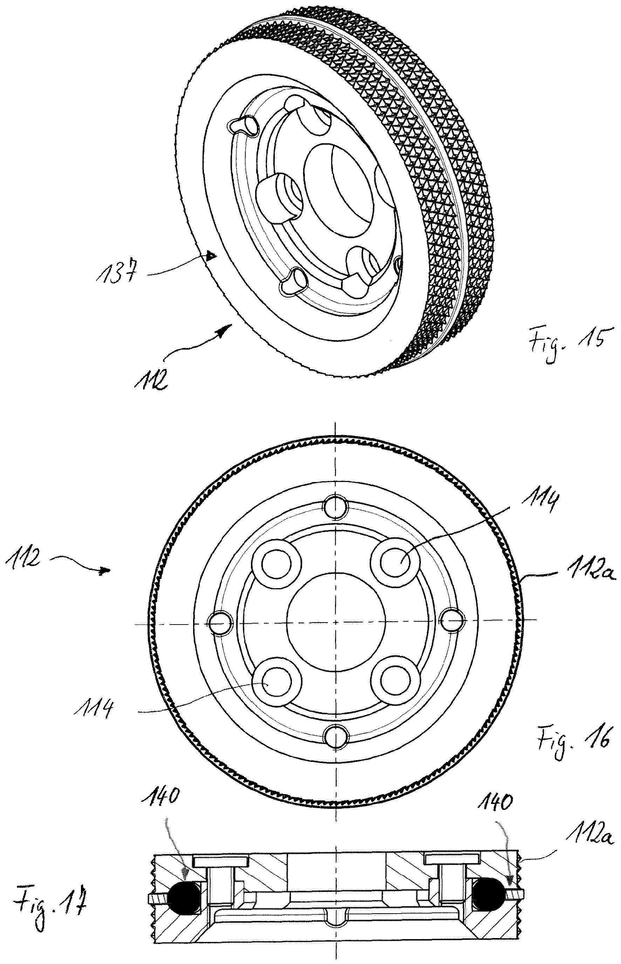

In Fig. 14, 15, 16 und 17 ist eine weitere bevorzugte Ausführungsform eines erfindungsgemässen Spannrads 112 dargestellt. Das Spannrad 112 kann in Bezug auf seine Breite, vorzugsweise etwa in der Mitte längsgeteilt sein, wobei die beiden Teile 112b, 112c des Spannrads 112 mittels geeigneten Befestigungselementen, beispielsweise Schrauben 114, lösbar miteinander verbindbar sind. Im Bereich dieser Teilungsebene, die nicht eben verlaufen muss, ist im äusseren Ring 137 des Spannrads 112 eine umlaufende Nut 140 ausgebildet, die zur Umfangsfläche 112a des Spannrads 112 hin offen ist und sich in Richtung zu dieser verjüngt bzw. verkleinert ist.

In der Nut 140 können ein oder mehrere Rückstellelemente angeordnet sein. Im Ausführungsbeispiel sind als Rückstellelement elastische Ringabschnitte 143, beispielsweise mehrere gummielastische O-Ringabschnitte 143, angeordnet. Vorzugsweise sind diese Ringabschnitte mit Abstand zueinander gleichmässig in der Nut 140 verteilt, wie dies im Ausführungsbeispiel mit insgesamt vier Ringabschnitten 143 der Fall ist. Die Rückstellelemente 143 befinden sich unterhalb von einem oder mehreren Abstandselementen. Im Ausführungsbeispiel ist lediglich ein als in sich geschlossener Ring ausgebildetes Abstandselement 145 vorgesehen. Ein Aussendurchmesser des in der Nut angeordneten Rings 145 ist dabei so bemessen, dass im unbelasteten Zustand des Rings 145 dieser mit seiner äusseren Umfangsfläche über die Umfangsfläche 112a des Spannrings 112 übersteht. Mit seiner inneren Umfangsfläche befindet sich der Ring 145 in der Nut. Die Rückstellelemente sind an der inneren Umfangsfläche des kreisförmigen und im wesentlichen formstabilen Rings 145 angebracht. In anderen Ausführungsformen kann auch eine andere Anzahl an Abstandselementen sowie eine andere Anzahl von Rückstellelementen vorgesehen sein.

Durch Anlage eines Umreifungsbands gegen den Ring 145 und durch Ausübung einer bestimmten Mindestdruckkraft auf den Ring entlang eines bestimmten Winkelbereichs entlang eine Abschnitts des Umfangs des Spannrads durch das Umreifungsband, kann in etwa der entlang dieses Winkelbereichs über die Nut hinausragende Abschnitt des Rings 145 in die Nut 140 hineingedrückt werden, so dass in diesem ortsfesten Winkelbereich des Spannrads 112, das Umreifungsband in Anlage gegen die Umfangsfläche 112a des Spannrads 112 gelangt und von der Umfangsfläche 112a bei der Bewegung des Spannrads 112 mitgenommen werden kann. Der im Ausführungsbeispiel durch die erwarteten auf ihn einwirkenden Kräfte im wesentlichen nicht verformbare und somit formstabile Ring 145 wird bei diesem Vorgang somit in Bezug auf die Drehachse des Spannrads leicht exzentrisch angeordnet. Der Ring 145 ragt hierdurch mit seinem vom Umschlingungswinkel des Bands nicht erfassten Abschnitt weiter aus der Nut 140 heraus, als im vom Umreifungsband unbelasteten Zustand des Spannrads. Durch Entlastung des Rings 145 vom Umreifungsband oder bei nicht ausreichend grosser Druckkraft auf den Ring 145 durch das Umreifungsband, können nach Abschluss des Spannvorgangs die elastischen Rückstellkräfte von einem oder mehreren der Ringaschnitte 143 den Ring 145 wieder über seinen gesamten Umfang aus der Nut herausragen lassen.

Durch diese bevorzugte Anordnung kann während des Spannvorgangs, während dem das Umreifungsband eine ausreichend hohe Druckkraft auf den sich im Umschlingungsbereich des Umreifungsbands befindenden Ring 145 ausübt, der Ring 145 abschnittsweise in die Nut 140 hineingedrückt werden. Während des Rückzugsvorgangs, während dem nur eine vergleichsweise geringe Zugspannung im Umreifungsband vorhanden ist, ist die Druckkraft auf den im Umschlingungsbereich des Bands momentan angeordneten Abschnitt des Rings 145 nicht ausreichend gross, um diesen Ringabschnitt vollständig in die Nut 140 hineinzudrücken. Das Band liegt hierdurch gegen den Abschnitt des Rings 145 und nicht gegen die Oberfläche des Spannrads 112 an. Der Ring 145 hält das Umreifungsband mit Abstand zur Umfangsfläche des Spannrads 112.

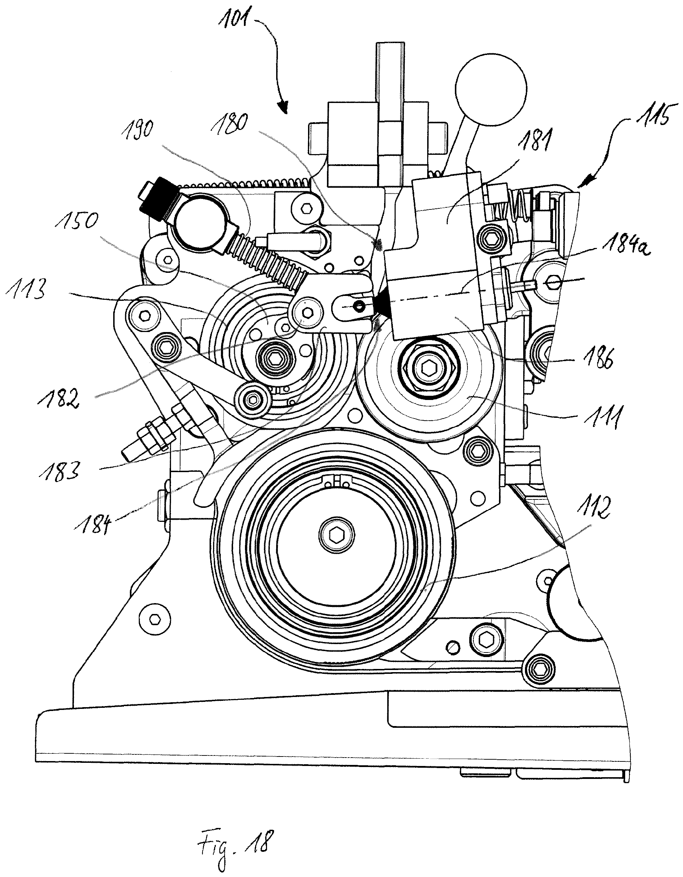

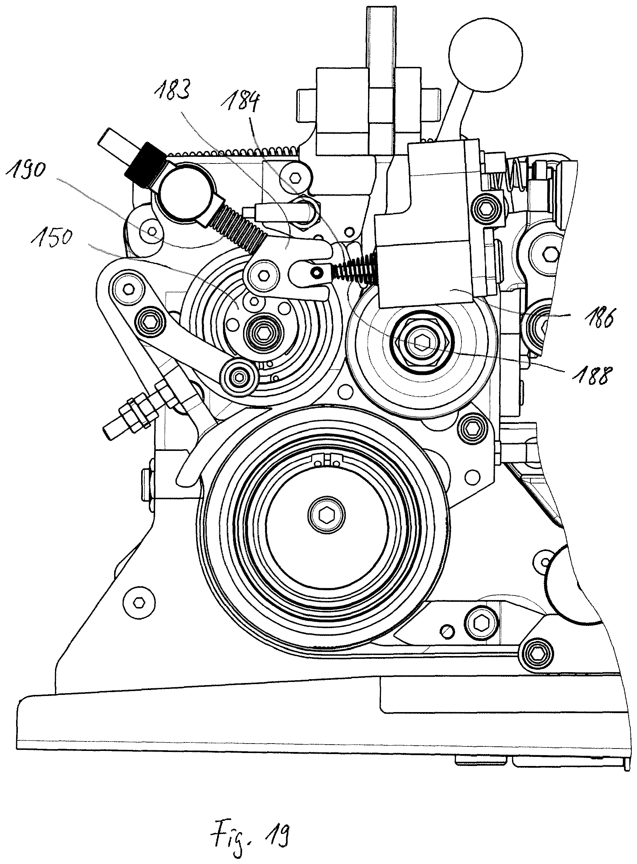

In den Fig. 18, 19 ist ein weiteres Ausführungsbeispiel für eine Bandantriebseinrichtung 115 dargestellt. Auch diese weist lediglich drei Rollen 111, 112, 113 auf, die für die Aufbringung der Bandvorschub-, Bandrückzugs- sowie die Bandspannungsbewegung auf das Band durch Kontakt mit dem Band verantwortlich sind, wobei die beiden Rollen 111 und 112 mittels eines Motors, insbesondere mittels nur eines gemeinsamen Motors, antreibbar sind. Die relative Anordnung der Drehachsen der drei Rollen 111, 112, 113 zueinander, entspricht zumindest in etwa der Anordnung dieser Drehachsen im Ausführungsbeispiel von Fig. 5 und 6.

Die Gegenrolle 113 ist wiederum schwenkbar ausgebildet, so dass sie in einer Schwenkposition zum Andruck des Umreifungsbands gegen die Rolle 111 und in einer anderen Schwenkposition zum Andruck des Umreifungsbands gegen die Spannrolle 112 vorgesehen ist. Der hierfür vorgesehene Schwenkmechanismus der Gegenrolle 113 und dessen Antrieb kann in prinzipiell gleicher Weise wie bei dem Ausführungsbeispiel der Fig. 1 bis 13 ausgebildet sein. Die Gegenrolle 113 ist wie im Ausführungsbeispiel von Fig. 5 und 6 auf einem Exzenter 150 drehbar gelagert, so dass die Gegenrolle 113 bei einer Schwenkbewegung von einer der Rollen 111, 112 zur jeweils anderen Rolle 111, 112 eine nicht kreisbogenförmige Bewegung ausführt. Wie in den Fig. 18 und 19 gezeigt ist, ist am Exzenter 150 der Gegenrolle 113 eine Lüfteinrichtung 180 gelagert, wobei die Lüfteinrichtung 180 sich mit einem Träger 181 am Gestell der Umreifungsvorrichtung 101 abstützt. Die Lagerstelle 182 der Lüftungseinrichtung am Exzenter 150 ist selbst schwenkbar am Exzenter angeordnet und ist als C- oder gabelförmiges Element 183 ausgebildet, um hierdurch eine Aufnahme für ein Ende eines Kolbens 184 auszubilden. Dieser Kolben 184 ist im Träger 181 der Lüftungseinrichtung 180 verschiebbar angeordnet. Die Abstützstelle befindet sich in der Darstellung von Fig. 18 und 19 unmittelbar oberhalb der Rolle 111. Der Träger 181 der Lüftungseinrichtung ist hierbei ebenfalls schwenkbar gelagert.

Im gezeigten Ausführungsbeispiel ist die Lüfteinrichtung 180 mit einem Lüftelement versehen, das dazu vorgesehen ist, eine gesteuerte Bewegung auszuführen, mit der auf die Gegenrolle 113 eingewirkt wird, um die Gegenrolle 113 in ihrer Schwenkposition an der Rolle 111 zu lüften bzw. geringfügig abzuheben. Vorzugsweise soll die Gegenrolle 113 in ihrer Schwenkposition bei der Rolle 111 auch nach einer Lüftung wieder an die Rolle 111 angestellt werden können, beispielsweise ebenfalls mittels der Lüfteinrichtung. Im Ausführungsbeispiel ist das Lüftelement als Hubmagnet 186 ausgebildet, der an der Lüftungseinrichtung 180 angeordnet und gelagert ist. Der Hubmagnet 186 kann mit seinem Kolben 184 eine lineare Hubbewegung entlang der Längsachse 184a seines Kolbens 184 ausführen. Wie in Fig. 18, 19 gezeigt ist, ist ein Ende des Kolbens 184 in der zum Träger 181 hin offenen Ausnehmung des C- oder gabelförmigen Elements 183 angeordnet. Das Ende des Kolbens 184 sowie die Ausnehmung des C-förmigen Elements können dabei derart gestaltet sein, dass sich bei der Lüftungsbewegung das Ende des Kolbens 184 im C-förmigen Element relativ zu diesem bewegen kann.

Die verlängerte Längsachse184a des Kolbens 184 verläuft hierbei zumindest in etwa durch die Anlenkstelle des C-förmigen Elements 183. Eine Hubbewegung des Kolbens 184 in Richtung auf die Gegenrolle 113 führt somit zu einer Drehbewegung des Exzenters um dessen Drehachse. In der Darstellung von Fig. 18 erfolgt die Drehbewegung im Gegenuhrzeigerinn, wie dies durch Vergleich der beiden Fig. 18 und 19 festgestellt werden kann. Die Rotationsbewegung des Exzenters 150 wiederum führt dazu, dass die Drehachse der Gegenrolle 113 parallelverschoben wird und sich zwischen der Rolle 111 und der Gegenrolle 113 ein Spalt bzw. ein vergrößerter Spalt ergibt. Die Breite des Spalts sollte hierbei eine Grösse aufweisen, die größer ist als die Dicke des jeweils verarbeiteten Umreifungsbands. Als Hubmagnet kann beispielsweise das Produkt GKb-32.06 des Unternehmens Isliker Magnete AG, CH-8450 Andelfingen, zum Einsatz kommen.

Auf dem Kolben 184 kann ein mechanisches Federelement angeordnet sein, insbesondere zumindest eine Druckfeder 188. Diese Druckfeder 188 wird bei der Bewegung der Gegenrolle 113 von der Spannrolle 112 zur Anlage gegen die Rolle 111 gestaucht und damit federelastisch gespannt. Der elektrisch betätigbare magnetische Hubkolben ist in dieser Phase ausgeschaltet und hat hierdurch keine Wirkung. Bei der Hubbewegung wird die Druckfeder 188 zumindest teilweise entspannt und die Federkraft wirkt unterstützend zu der vom Hubmagnet ausgeübten Kraft, mit welcher der Kolben 184 für die Lüftung der Gegenrolle 113 von der Rolle 111 bewegt wird. In anderen Ausführungsbeispielen, in denen der Hubmagnet oder ein anderes Rückstellelement alleine eine für den Lüftungsvorgang ausreichend hohe Kraft bereitstellt.

Bei der Erzeugung der Umreifung wird - wie bereits beschrieben - mittels der Rolle 111 und der gegen sie anliegende und das Band zwischen den beiden Rollen einklemmende Gegenrolle 113, das Band durch den Bandführungskanal 28 in Zuführrichtung bewegt. Bei Erreichen des Bereichs des Endes des Bandführungskanals, wie er beispielsweise in Fig. 1 in stark schematisierter Weise dargestellt ist, durch das Umreifungsband, trifft das Band auf einen Anschlag oder das Erreichen des Endes des Bandführungskanals kann auf andere Weise detektiert werden, beispielsweise durch eine Lichtschranke. Hierdurch wird ein Signal erzeugt, durch das die Steuerung der Umreifungsvorrichtung die motorische Antriebsbewegung der Rolle 111 stoppt und - zumindest im wesentlichen zeitgleich - die Hubbewegung des Kolbens 184 des Hubmagneten auslöst. In anderen Ausführungsformen der Erfindung ist es auch denkbar, dass der Stopp der Antriebsbewegung der Rolle 111 und der Beginn des Lüftungsvorgangs zeitlich zueinander versetzt sind, der Stopp der Antriebsbewegung also vor oder nach dem Beginn des Lüftvorgangs erfolgt.

Als Folge des Starts des Lüftvorgangs fährt der Kolben 184 in Richtung auf das C-förmige Element 183 aus und wirkt hierbei mit seinem Ende auf das C- oder gabelförmige Element ein. Aufgrund seiner Anordnung am Exzenter 150 wird der Exzenter bei der Hubbewegung des Kolbens gedreht. Im Ausführungsbeispiel und in der Darstellung von Fig. 18 erfolgt die Drehbewegung des Exzenters um einen Drehwinkel kleiner 90° in Gegenuhrzeigerrichtung. Die Drehbewegung erfolgt gegen die Federkraft der Andruckfeder 190, die hierbei gestaucht wird und ebenfalls am Exzenter 150 angelenkt ist. Als Folge der Drehbewegung wird die Gegenrolle 113 von der Rolle 111 gelüftet, d.h. angehoben und der Abstand zwischen den beiden Rollen 111, 113 vergrössert, so dass ein Spalt zwischen den Rollen entsteht, der grösser ist als die Banddicke.

Das mit hoher Geschwindigkeit durch den Bandkanal der Bandführung 6 geschossene Umreifungsband hat bei gattungsgemässen Umreifungsvorrichtungen durch den plötzlichen und abrupten Bandstopp die Tendenz zwischen den Rollen 111, 112, 113 und dem Ende des Umreifungskanals Wellen zu bilden. Insbesondere im Bereich der Rollen 111, 112, 113 können solche Wellen zu Funktionsstörungen führen. Durch die bevorzugte erfindungsgemässe Ausführungsform, bei der die Gegenrolle 113 gelüftet wird, kann das Band insbesondere unmittelbar nach dem Stopp des Vorschubs sich soweit als erforderlich und frei wieder entgegen der Vorschubrichtung in Richtung auf den Bandvorrat bewegen, damit sich der für die Länge des Bandkanals möglicherweise überschüssige und die Wellenbildung bewirkende Bandanteil im Bandführungskanal zurückbewegen kann. Die Steuerung der Umreifungsvorrichtung kann dann anschliessend den Hubmagneten wieder abschalten. Der Hubmagnet verliert hierdurch seine Wirkung, wodurch die Andruckfeder 190 den Exzenter 150 entgegen der Drehrichtung zuvor wieder zurückbewegen kann und damit die Gegenrolle 113 wieder in Anlageposition gegen das Band bringt, in der das Band zwischen der Rolle 111 und der Gegenrolle 113 eingeklemmt ist. Der anschliessende Bandrückzugs- sowie Spannvorgang kann in gleicher Weise wie bei den Ausführungformen der Erfindung gemäss den Fig. 1 bis 13 erfolgen.

**Bezugszeichenliste**

| | | | |
|---|---|---|---|
| 1 | Umreifungsvorrichtung | 37 | Ring |
| 2 | Steuerung | 38 | Ausnehmung |
| 3 | Vorratseinrichtung | 39 | Rändelung/Verzahnung |
| 5 | Umreifungskopf | 40 | Nut |
| 6 | Bandführung | 43 | O-Ring |
| 8 | Gestell | 44 | O-Ring |
| 11 | Rolle | 45 | Ring |
| 11a | Umfangsfläche | 48 | Bandrückzugsrichtung |
| 12 | Spannrad | 50 | Exzenter |
| 12a | Umfangsfläche Spannrad | 51 | Welle |
| 13 | Gegenrolle | 52 | Träger |
| 14 | Motor | 53 | Aufnahme |
| 14a | Getriebeeinrichtung | 54 | Lagerstelle |
| 15 | Bandantriebseinrichtung | 56 | Parallelogramm |
| 16 | Steuerungskomponente | 57 | langer vertikaler Hebel |
| 17 | Bandhandhabungskomponente | 58 | horizontaler Hebel |
| 18 | Teilträger | 59 | kurzer vertikaler Hebel |
| 19 | Hauptträger | 60 | Schwenklagerstelle |
| 20 | Bandvorschubeinrichtung | 61 | Schwenklagerstelle |
| 21 | Bandrückzugseinrichtung | 64 | schräge Fläche |
| 22 | Spanneinrichtung | 65 | Lagerstelle |
| 23 | Achse | 66 | Träger |
| 27 | Schwenkeinrichtung | 67 | Rotationsachse |
| 28 | Bandführungskanals | 68 | Rrotationsachse |
| 28a | Kanalabschnitt | 70 | Federelement |
| 28b | äussere Begrenzung | 71 | Anlenkstelle |
| 29 | Schnittstelle | 72 | Zapfen |
| 30 | Klemmhebel | | |
| 31 | Kanalstück | 101 | Umreifungsvorrichtung |
| 32 | Bandvorschubrichtung | 111 | Rolle |
| 33 | äusseres Kanalsegment | 112 | Spannrad |
| 112a | Umfangsfläche | 184 | Kolben |
| 112b | Teil | 184a | Achse |
| 112c | Teil | 186 | Hubmagnet |
| 113 | Gegenrolle | 188 | Druckfeder |
| 114 | Schraube | 190 | Andruckfeder |
| 115 | Bandantriebseinrichtung | B | Breite |
| 137 | Ring | H | Höhe |
| 140 | Nut | H₁ | Höhe |
| 143 | Ringabschnitt | | |
| 145 | Ring | | |
| 150 | Exzenter | | |
| 180 | Lüftungseinrichtung | | |
| 181 | Träger | | |
| 182 | Lagerstelle | | |
| 183 | C-förmiges Element | | |

## Patentansprüche

1. Umreifungseinrichtung einer Umreifungsvorrichtung zur Umreifung von Packgut mit einem Umreifungsband, insbesondere mit einem Kunststoffumreifungsband, mit einer Bandvorschubeinrichtung (20) zum Vorschub des Umreifungsbands während einer Bildung einer Bandschlaufe, einer Bandrückzugseinrichtung (21) zum Rückzug des Umreifungsbands nach Bildung der Bandschlaufe, um das Umreifungsband an Packgut anzulegen, sowie mit einer Spanneinrichtung (22), mit der bei dem am Packgut anliegenden Umreifungsband eine Bandspannung steigerbar ist,
**gekennzeichnet durch**
nur drei Rollen (11, 12, 13) der Bandvorschubeinrichtung (20), der Bandrückzugseinrichtung (21) und der Spanneinrichtung (22), mit weichen Bandbewegungen erzeugbar sind, wobei nur ein Motor (14) zum Antrieb der in der Bandvorschubeinrichtung, der Bandrückzugseinrichtung und der Spanneinrichtung rotativ motorisch angetriebenen Rollen derart vorgesehen ist, dass von den nur drei Rollen (11, 12, 13) zwei der Rollen (11, 12) mit dem gleichen nur einem Motor (14) antreibbar sind, wobei die dritte Rolle (13) rotativ nicht angetrieben und mittels einer Schwenkeinrichtung schwenkbar angelenkt ist, hierbei die Schwenkeinrichtung mit einem Antrieb wirkverbunden ist, so dass die als Gegenrolle fungierende Rolle (13) entweder in Anlage gegen die Rolle (11) oder in Anlage gegen die als Spannrad (12) fungierende Rolle bringbar ist.

2. Umreifungseinrichtung nach Anspruch 1, **dadurch gekennzeichnet, dass** mit dem nur einen Motor (14) jeweils eine Rolle der Spanneinrichtung (22), eine Rolle der Bandvorschubeinrichtung (20) und eine Rolle der Bandrückzugseinrichtung (21) antreibbar ist.

3. Umreifungseinrichtung nach einem oder beiden der vorhergehenden Ansprüche, **dadurch gekennzeichnet, dass** mit dem nur einen Motor (14) eine gemeinsame Rolle der Bandvorschub- und Bandrückzugseinrichtung (20, 21) antreibbar ist.

4. Umreifungseinrichtung nach Anspruch 3, **dadurch gekennzeichnet, dass** die gemeinsame Rolle der Bandvorschub- und Bandrückzugseinrichtung (20, 21) mit dem nur einen Motor (14) in unterschiedliche Rotationsrichtungen antreibbar ist.

5. Umreifungseinrichtung nach zumindest einem der vorhergehenden Ansprüche, **dadurch gekennzeichnet, dass** eine Spannrolle (12) der Spanneinrichtung (22) mit dem nur einen Motor (14) antreibbar ist.

6. Umreifungseinrichtung nach Anspruch 5, **gekennzeichnet durch** eine unlösbare Wirkverbindung zur Übertragung der motorischen Antriebsbewegung zwischen dem nur einen Motor (14) und der Spannrolle (12) der Spanneinrichtung sowie zwischen dem nur einen Motor (14) und der gemeinsamen Rolle der Bandvorschub- und Bandrückzugseinrichtung (20, 21).

7. Umreifungseinrichtung nach zumindest einem der vorhergehenden Ansprüche, **dadurch gekennzeichnet, dass** eine nicht rotatorisch angetriebene Rolle (13), deren Umfangsfläche zum Kontakt mit dem Umreifungsband vorgesehen ist, sowohl Bestandteil der Spann-, als auch der Bandvorschub- als auch der Bandrückzugseinrichtung (20, 21, 22) ist.

8. Umreifungseinrichtung nach Anspruch 7, **dadurch gekennzeichnet, dass** die nicht rotativ angetriebene Rolle (13) als Gegenrolle vorgesehen ist und zwischen zwei Endpositionen schwenkbar ausgebildet ist.

9. Umreifungseinrichtung nach zumindest einem der vorhergehenden Ansprüche, **gekennzeichnet durch** eine Lüfteinrichtung (180), mit welcher zwischen einer als Gegenrolle vorgesehenen Rolle (13) und einer zur Aufbringung einer Bandbewegung vorgesehenen motorisch angetriebenen Rolle (11, 12) ein im Vergleich zur Aufbringung von Bandbewegungen vergrösserter Abstand erzeugbar ist.

10. Umreifungseinrichtung nach zumindest einem der vorhergehenden Ansprüche, **dadurch gekennzeichnet, dass** mit der Lüfteinrichtung (180) zwischen einem Bandvorschubs- und einem Bandrückzugsvorgang eines Umreifungsvorgangs ein Abstand zwischen einer als Gegenrolle vorgesehenen Rolle (13) und einer als Antriebsrolle für das Band vorgesehenen anderen Rolle (11, 12) erzeugbar ist, der größer ist als die Dicke des Umreifungsbands.

11. Umreifungseinrichtung nach Anspruch 9 oder 10, **gekennzeichnet durch** Mittel zur Rückstellung der Gegenrolle (13) in Richtung an die Antriebsrolle in eine Position, in welcher die beiden Rollen das Umreifungsband zwischen sich einklemmen, wobei die Rückstellung der Gegenrolle vorzugsweise vor einer Ausführung eines Bandrückzugsvorgangs erfolgt.

## Claims

1. Strapping device of a strapping apparatus for strapping packaged articles with a strapping band, in particular with a plastics strapping band, which strapping device having a band advancement device (20) for the advancement of the strapping band during the formation of a band loop, having a band retraction device (21) for the retraction of the strapping band after the formation of the band loop for the purposes of causing the strapping band to be laid against the packaged article, and having a tensioning device (22) by way of which a band tension in the strapping band laid against the packaged article can be increased, **characterized by**
only three rollers (11, 12, 13) of the band advancement device (20), of the band retraction device (21) and of the tensioning device (22), by means of which band movements can be generated, wherein only one motor (14) is provided for driving the rollers which are driven in rotation by motor action in the band advancement device, in the band retraction device and in the tensioning device, such that, of the only three rollers (11, 12, 13), two of the rollers (11, 12) can be driven by means of the same only one motor (14), wherein the third roller (13) is not driven in rotation and is pivotably articulated by means of a pivot device, in this case the pivot device is operatively connected to a drive, such that the roller (13) which functions as counterpart roller can be placed either in contact with the roller (11) or in contact with the roller which functions as tensioning wheel (12).

2. Strapping device according to Claim 1, **characterized in that**, by way of the only one motor (14), in each case one roller of the tensioning device (22), one roller of the band advancement device (20) and one roller of the band retraction device (21) can be driven.

3. Strapping device according to one or both of the preceding claims, **characterized in that**, by way of the only one motor (14), a common roller of the band advancement device and band retraction device (20, 21) can be driven.

4. Strapping device according to Claim 3, **characterized in that** the common roller of the band advancement device and band retraction device (20, 21) can be driven in different directions of rotation by way of the only one motor (14).

5. Strapping device according to at least one of the preceding claims, **characterized in that** a tensioning roller (12) of the tensioning device (22) can be driven by way of the only one motor (14).

6. Strapping device according to Claim 5, **characterized by** a non-detachable operative connection for the transmission of the motor drive movement between the only one motor (14) and the tensioning roller (12) of the tensioning device and between the only one motor (14) and the common roller of the band advancement device and band retraction device (20, 21).

7. Strapping device according to at least one of the preceding claims, **characterized in that** a roller (13) which is not driven in rotation and whose circumferential surface is provided for making contact with the strapping band is a constituent part of the tensioning device and of the band advancement device and of the band retraction device (20, 21, 22).

8. Strapping device according to Claim 7, **characterized in that** the roller (13) which is not driven in rotation is provided as a counterpart roller and is designed so as to be pivotable between two end positions.

9. Strapping device according to at least one of the preceding claims, **characterized by** a clearance device (180) by means of which, between a roller (13) provided as a counterpart roller and a motor-driven roller (11, 12) provided for imparting a band movement, a spacing increased in relation to the imparting of band movements can be generated.

10. Strapping device according to at least one of the preceding claims, **characterized in that**, by way of the clearance device (180), between a band advancement process and a band retraction process of a strapping process, a spacing between a roller (13) provided as a counterpart roller and another roller (11, 12) provided as a drive roller for the band, can be generated which is greater than the thickness of the strapping band.

11. Strapping device according to Claim 9 or 10, **characterized by** means for restoring the counterpart roller (13) in the direction of the drive roller into a position in which the two rollers clamp the strapping band between them, wherein the restoring of the counterpart roller is preferably performed before a band retraction process is performed.

## Revendications

1. Système de cerclage d'un dispositif de cerclage pour le cerclage de marchandises emballées avec une bande de cerclage, en particulier avec une bande de cerclage en matière plastique, avec un système d'avancement de bande (20) pour l'avancement de la bande de cerclage pendant une formation d'une boucle de bande, avec un système de rétraction de bande (21) pour rétracter la bande de cerclage après la formation de la boucle de bande, pour appliquer la bande de cerclage sur les marchandises emballées, ainsi qu'avec un système de serrage (22) avec lequel une tension de bande peut être accrue sur la bande de cerclage appliquée sur les marchandises emballées, **caractérisé par** seulement trois rouleaux (11, 12, 13) du système d'avancement de bande (20), du système de rétraction de bande (21) et du système de serrage (22), avec lesquels des mouvements de la bande peuvent être produits, dans lequel il n'est prévu qu'un moteur (14) pour l'entraînement des rouleaux entraînés en rotation de façon motorisée dans le système d'avancement de bande, le système de rétraction de bande et le système de serrage, de telle manière que parmi les seulement trois rouleaux (11, 12, 13) deux des rouleaux (11, 12) puissent être entraînés par le même moteur unique (14), dans lequel le troisième rouleau (13) n'est pas entraîné en rotation et est articulé de façon pivotante au moyen d'un système de pivotement, en l'occurrence le système de pivotement est en liaison active avec un entraînement, de telle manière que le rouleau (13) faisant office de contre-rouleau puisse être amené soit en appui contre le rouleau (11) soit en appui contre le rouleau faisant office de roue de blocage (12).

2. Système de cerclage selon la revendication 1, **caractérisé en ce qu'**un rouleau du système de serrage (22), un rouleau du système d'avancement de bande (20) et un rouleau du système de rétraction de bande (21) puisse respectivement être entraîné par le moteur unique (14).

3. Système de cerclage selon une ou les deux des revendications précédentes, **caractérisé en ce qu'**un rouleau commun du système d'avancement de bande et du système de rétraction de bande (20, 21) peut être entraîné par le moteur unique (14).

4. Système de cerclage selon la revendication 3, **caractérisé en ce que** le rouleau commun du système d'avancement de bande et du système de rétraction de bande (20, 21) peut être entraîné dans des sens de rotation différents par le moteur unique (14).

5. Système de cerclage selon au moins une des revendications précédentes, **caractérisé en ce qu'**un rouleau de serrage (12) du système de serrage (22) peut être entraîné par le moteur unique (14).

6. Système de cerclage selon la revendication 5, **caractérisé par** une liaison active inséparable pour la transmission du mouvement d'entraînement motorisé entre le moteur unique (14) et le rouleau de serrage (12) du système de serrage ainsi qu'entre le moteur unique (14) et le rouleau commun du système d'avancement de bande et du système de rétraction de bande (20, 21).

7. Système de cerclage selon au moins une des revendications précédentes, **caractérisé en ce qu'**un rouleau non entraîné en rotation (13), dont la surface périphérique est prévue pour le contact avec la bande de cerclage, est un composant aussi bien du système de serrage que du système d'avancement de bande et que du système de rétraction de bande (20, 21, 22).

8. Système de cerclage selon la revendication 7, **caractérisé en ce que** le rouleau non entraîné en rotation (13) est prévu comme contre-rouleau et est formé de façon pivotante entre deux positions finales.

9. Système de cerclage selon au moins une des revendications précédentes, **caractérisé par** un système d'air (180), avec lequel une distance plus grande par comparaison avec l'application de mouvements de bande peut être réalisée entre un rouleau (13) prévu comme contre-rouleau et un rouleau (11, 12) motorisé prévu pour l'application d'un mouvement de bande.

10. Système de cerclage selon au moins une des revendications précédentes, **caractérisé en ce qu'**une distance entre un rouleau (13) prévu comme contre-rouleau et un autre rouleau (11, 12) prévu comme rouleau d'entraînement pour la bande, qui est plus grande que l'épaisseur de la bande de cerclage, peut être produite avec le système d'air (180) entre une opération d'avancement de bande et une opération de rétraction de bande d'une opération de cerclage.

11. Système de cerclage selon une revendication 9 ou 10, **caractérisé par** des moyens pour le rappel du contre-rouleau (13) en direction du rouleau d'entraînement dans une position, dans laquelle les deux rouleaux serrent entre eux la bande de cerclage, dans lequel le rappel du contre-rouleau est effectué de préférence avant d'effectuer une opération de rétraction de bande.
